# EUROPEAN PATENT APPLICATION

(11) **EP 1 014 606 A2**
(43) Date of publication of application: **28.06.2000**
(21) Application number: 99110663.4
(22) Date of filing: 02.06.1999
(51) Int. Cl.: H04B 10/17

(54) **Optical transmission system and terminal station thereof**

(30) Priority: 24.12.1998 JP 36740098
(71) Applicant: KDD Submarine Cable Systems Inc., Tokyo (JP)
(72) Inventor: NIIRO Yasuhiko c/o KDD Submarine Cable Systems Inc, Shinjuku-ku,Toyo (JP)
(74) Representative: Schaumburg, Thoenes & Thurn

(57) **Abstract**

An optical submarine repeater transmission cable comprises a pair of optical fibers and a power feeding line for supplying power to an optical repeater. First and second landing stations on both ends of the optical cable respectively comprise a pair of optical amplifiers for amplifying wavelength multiplexed optical signals propagating on the optical fibers and power feeding equipment for supplying electric current to the power feeding line. The power feeding equipment is connected to ocean ground. First and second local stations respectively comprise an optical transmitter/receiver for transmitting/receiving the wavelength multiplexed optical signals and transporting the signals mutually with domestic networks behind, and a power feeding controller for remotely controlling the power feeding equipment of the landing station via a control signal line. As a back haul line, a pair of optical fibers are disposed between the first local station and the first landing station, and also a pair of optical fibers are disposed between the second local station and the second landing station.

## Description

### FIELD OF THE INVENTION

This invention relates to an optical transmission system and a terminal station system thereof, and more specifically, to an optical transmission system and a terminal station system thereof suitable for submarine optical fiber transmission.

### BACKGROUND OF THE INVENTION

In a submarine optical fiber transmission, respective landing station located at each end of the oceans is connected to domestic lines according to a signal format (for example, STM-1, STM-16 or the like) of the respective domestic connection specification. When optical fibers are also used for transmission between a landing station and a trunk station of a domestic line, the optical fibers being used are the ones suited for the domestic specification.

Public demand for an international communication system of massive capacity has been tremendous in recent years. Therefore, an optical fiber transmission system is about to be realized such that a single optical fiber can transmit optical signals of order of a terabit per second by adopting a wavelength division multiplexing technology. Assuming for instance that a wavelength of 10 Gb/s is wavelength-multiplexed to 16 wavelengths, a single optical fiber alone becomes capable of transmitting 160 Gb/s. Its transmission capacity increases proportionally as the number of fibers grows. However, the domestic lines are not equipped with transmission lines suitable for the terabit per second, and the landing station has to meet various domestic demands. Therefore, the landing station converts higher bit rate signals for international communication use and lower bit rate signals suitable for domestic transmission specifications.

As a result, when an international transmission capacity is for example set to 160 Gb/s by using wavelength multiplexing and a domestic specification is STM-16, it is required to dispose a large number of transmission circuits in parallel, and moreover a domestic line needs the same terminal station equipment on both sides.

As explained above, in the prior art, it is indispensable to reduce an optical signal of large capacity for international communication use into low bit rate signals for domestic use and to dispose the same type of transmission terminal stations on both ends of a domestic line. That is, in order to use the signals for domestic lines, a landing station and a domestic trunk station should be equipped with the same systems. The equipment for the terminal stations alone cost several ten billion yen, and it has caused a drastic increase in communication facility costs.

Public demand for communication has been more and more mounted. To meet the demand, it is essential to reduce costs.

### SUMMARY OF THE INVENTION

An object of the invention is to provide an optical transmission system and a terminal station system thereof that can be produced relatively economical.

Another object of the invention is to provide an optical transmission system and a terminal station system thereof that can greatly reduce costs of terminal stations in wavelength multiplexing optical transmission.

In this invention, a main optical fiber transmission line or a first optical fiber transmission line for transmitting wavelength multiplexed signal lights is connected to a sole or a plurality of terminal station systems that comprise a sub-terminal station, a main terminal station, and an internal optical fiber transmission line or a second or third optical fiber transmission line for connecting these terminal stations. The sub-terminal station comprises an optical amplifier for amplifying wavelength multiplexed optical signals input from the main optical fiber transmission line and wavelength multiplexed optical signals to be output to the main optical fiber transmission line, and a power feeding equipment for supplying power to submersible repeaters through the main optical fiber transmission line. The main terminal station comprises an optical signal transmitter/receiver and a power feeding controller for remotely controlling the power feeding equipment of the sub-terminal station.

The structure mentioned above makes it possible to extremely simplify the transmission system between the sub-terminal station and the main terminal station, and thus the costs of the terminal stations can be drastically reduced. In a transoceanic optical fiber transmission system, for example, the sub-terminal station corresponds to a landing station and the main terminal station corresponds to a central station or a local station in a domestic network. Since the signal lights propagating on the main optical fiber transmission line are transmitted intact as far as the main terminal station, the costs of signal transmission systems between the main terminal station and the sub-terminal station can be reduced. In particular, as digital transmission terminal stations suitable for domestic networks become unnecessary, the costs of terminal station equipment can be reduced on a large scale.

By disposing a power feeding equipment for supplying power to the submersible repeaters through the main optical fiber transmission line in the sub-terminal station, the power feeding equipment can be connected to ocean ground like on the main optical fiber transmission cable. Since the power feeding controller for remotely controlling the power feeding equipment is disposed in the main terminal station, power supply to the main optical fiber transmission line can be operated from the main terminal station by remote control. Therefore, the sub-terminal station can be operated unmanned.

### BRIEF DESCRIPTION OF THE DRAWINGS

Fig. 1 shows a schematic block diagram of an embodiment of the invention; and
Fig. 2 shows a schematic block diagram of a local station 30A.

### DESCRIPTION OF THE PREFERRED EMBODIMENTS

Embodiments of the invention will be explained below in detail with reference to the drawings.

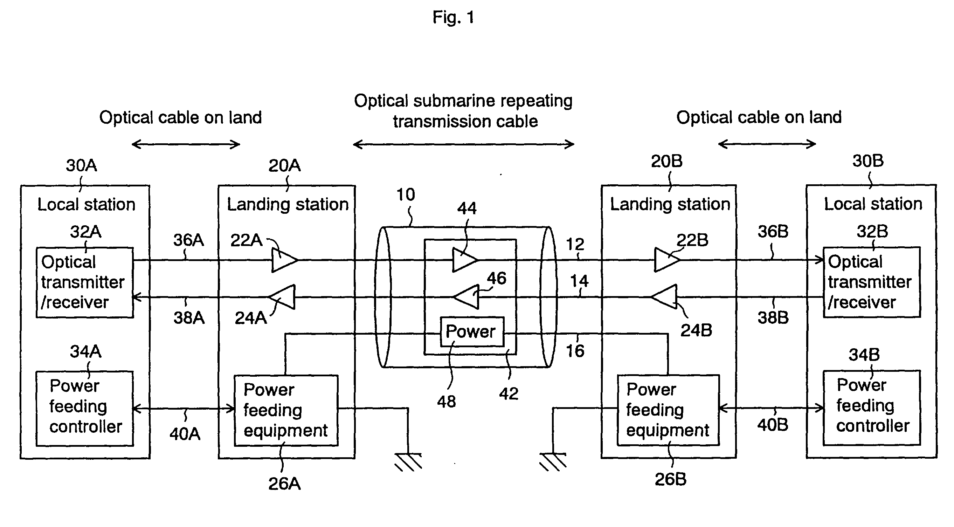

Fig. 1 shows a schematic block diagram of an embodiment of the invention. An optical submarine repeater transmission cable 10 comprises at least one pair of optical fiber lines 12 and 14 and a power feeding line 16 for supplying electrical power to optical repeaters. A landing station 20A disposed to one end of the optical submarine repeater transmission cable 10 comprises optical amplifiers 22A and 24A for amplifying signal lights that propagate on the optical fiber lines 12 and 14, and a power feeder 26A for supplying electrical current to the power feeding line 16 of the optical submarine repeater transmission cable 10. A landing station 20B disposed to the other end of the optical submarine repeater transmission cable 10 comprises optical amplifiers 22B and 24B for amplifying signal lights that propagate on the optical fiber lines 12 and 14, and a power feeding equipment 26B for supplying electrical current to the power feeding line 16 of the optical submarine repeater transmission cable 10. The power feeding equipment 26A and 26B are both connected to submarine ground.

Local stations (or domestic central stations) 30A and 30B comprise an optical transmitter/receiver 32A for transmitting/receiving optical signals and transporting the signals with a domestic network at the back, and power feeding controllers 34A and 34B for remotely controlling the power feeding equipment 26A and 26B of the landing stations 20A and 20B.

Optical fibers 36A and 38A for transmitting the optical signals are disposed between the local station 30A and the landing station 20A. The power feeding controller 34A of the local station 30A connects with the power feeding equipment 26A of the landing station 20A through a control signal line 40A. Similarly, optical fibers 36B and 38B for transmitting optical signals are disposed between the local station 30B and the landing station 20B. The power feeding controller 34B of the local station 30B connects with the power feeding equipment 26B of the landing station 20B through a control signal line 40B. The optical fibers 36A, 38A, 36B and 38B are back haul systems. The control signal lines 40A and 40B comprise for example lease lines or ISDN networks and so on.

The optical signals output from the optical transmitter/receiver 32A of the local station 30A enter the optical transmitter/receiver 32B of the local station 30B through the optical fiber 36A, the optical amplifier of the landing station 20A, the optical fiber 12 of the optical submarine repeater transmission cable 10, the optical amplifier 22B of the landing station 20B, and the optical fiber line 36B. In the meantime, the optical signals output from the optical transmitter/receiver 32B of the local station 30B enter the optical transmitter/receiver 32A of the local station 30A through the optical fiber 38B, the optical amplifier 24B of the landing station 20B, the optical fiber 14 of the optical submarine repeater transmission cable 10, the optical amplifier 24A of the landing station 20A, and the optical fiber 38A.

It is preferable that the optical fibers 36A, 36B, 38A and 38B have the same characteristics with the optical fibers 12 and 14 of the optical submarine repeater transmission cable 10, because they transmit the same optical signals. The optical fibers 12 and 14 of the optical submarine repeater transmission cable 10 generally comprise nonzero dispersion shifted fibers (NZDS fibers), and therefore the NZDS fibers are also used for the optical fibers 36A, 36B, 38A and 38B.

However, as the optical fibers 36A, 36B, 38A and 38B are disposed on the terrestrial link at a short distance, it is acceptable to employ optical fibers of another kinds (such as single mode fibers or dispersion shifted fibers) as far as the optical signals propagating on the optical submarine repeater transmission cable 10 can be transmitted intact. The optical fibers 36A, 36B, 38A and 38B can be either ones comprising optical repeaters or ones not comprising the optical repeaters. As long as the length of the optical fibers 36A, 36B, 38A and 38B is equivalent to the repeater spacing of the optical submarine repeater transmission cable 10, the optical fibers without repeaters can be realized.

As described above, the landing stations 20A and 20B are basically used for amplifying the optical signals, and therefore it becomes unnecessary to dispose a large number of digital terminal equipment for reducing the signals into a lower bit rate suitable for local connection. As a result, the costs of equipment for the landing stations 20A and 20B can be exceedingly reduced. Similarly, since the local stations 30A and 30B need not comprise corresponding digital terminal equipment for transmission with the landing stations anymore, the costs of equipment for the local stations 30A and 30B also can be greatly reduced.

The optical submarine repeater transmission cable 10 further comprises at least one submersible optical repeater 42. The submersible optical repeater 42 comprises an optical amplifier 44 for optically amplifying the optical signals propagating on the optical fiber 12, an optical amplifier 46 for optically amplifying the optical signals propagating on the optical fiber 14, and a power unit 48 for supplying power source to the optical amplifiers 44 and 46 using the electric current supplied by the power feeding equipment 26A or 26B through the power feeding line 16.

The power feeding equipment 26A and 26B for supplying operating power to the submersible optical repeater 42 of the optical submarine repeater transmission cable 10 should preferably be disposed at the landing stations 20A and 20B as shown in Fig. 1. For feeding the power to the submersible optical repeater 42 being disposed at the bottom of the sea, the power feeding equipment need to be connected to ocean ground. Accordingly, the landing stations 20A and 20B are generally disposed by the sea so as to be connected with submarine ground easily.

The power feeding controllers 34A and 34B of the local stations 30A and 30B control the power feeding equipment 26A and 26B of the landing stations 20A and 20B through the control signal lines 40A and 40B. Although being omitted in Fig. 1, equipment for monitoring the optical transmission lines composed of the optical fibers 12 and 14 of the optical submarine repeater transmission cable 10, the optical amplifiers 22A, 22B, 24A, 24B, 44 and 46, and the optical fibers 36A and 36B are provided in the local stations 30A and 30B. Consequently, since it becomes unnecessary to dispose the staff for the operation and maintenance at the landing stations 20A and 20B, those stations can be operated unmanned.

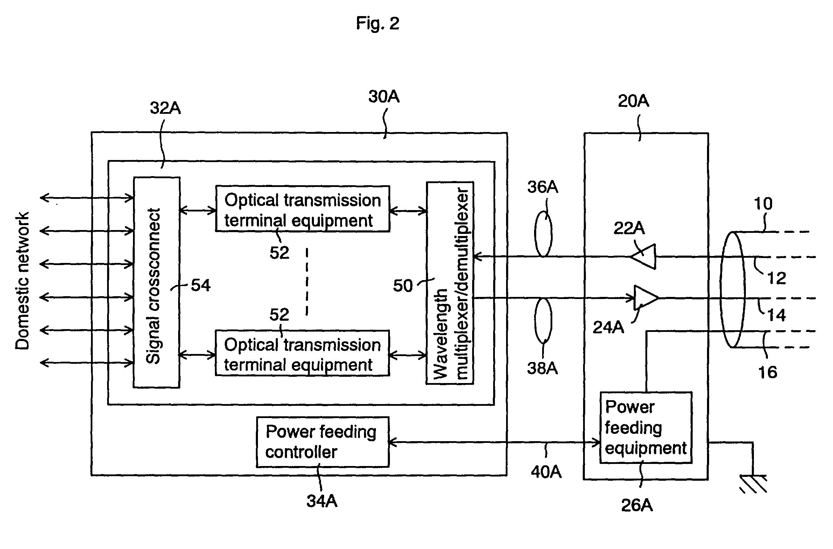

Fig. 2 shows a schematic block diagram of the local station 30A. A wavelength multiplexer/demultiplexer 50 demultiplexes optical signals from the optical fiber 36A into respective wavelengths and outputs them per wavelength toward each corresponding optical transmission terminal equipment 52. The optical transmission terminal equipment 52 comprise for example a dispersion compensating device for compensating accumulative chromatic dispersion of each wavelength and an optical digital regenerator for reshaping and/or retiming optical pulses. The received optical signals of respective wavelengths processed at the optical transmission terminal equipment 52 are sent to a signal crossconnect system 54. The signal crossconnect system 54 demultiplexes the signals from the respective optical transmission terminal equipment 52 into a predetermined signal form and rate for domestic use and sends them into a designated domestic network.

The signal crossconnect system 54, in reverse, supplies a plurality of signals to be transmitted from the domestic network to the respective optical transmission terminal equipment 52, and the optical transmission terminal equipment 52 supply signals from the signal crossconnect system 54 to the wavelength multiplexer/demultiplexer 50 after providing processes such as retiming and dispersion equalization. The wavelength multiplexer/demultiplexer 50 wavelength-division-multiplexes the optical signals from the optical transmission terminal equipment 52 and outputs them toward the optical fiber 38A.

When spare lines are provided besides the optical fibers 36A and 38A shown in Fig. 2, an optical adding/dropping equipment or an optical network switch for switching the lines in use and the spare lines is disposed between the optical transmission terminal equipment 52 and the signal crossconnect system 54. When it is connected to a ring type optical network, an optical adding/dropping equipment or a network switch is also disposed between the optical transmission terminal equipment 52 and the signal crossconnect system 54.

The signals being processed between the optical transmission terminal equipment 52 and the signal crossconnect system 54 can be either optical signals or electric signals.

As readily understandable from the foregoing explanation, according to the invention, a landing station becomes a sub-terminal station and thus its equipment can be extremely simplified. Consequently, the corresponding equipment of a main terminal station (for example, a local station) also becomes unnecessary. As a result, the costs of equipment can be drastically reduced. It is also possible that the landing station is operated unmanned. When an optical fiber transmission line connects the sub-terminal station and the main terminal station, the number of fibers can be reduced and therefore the costs of the lines are also greatly lowered.

While the invention has been described with reference to the specific embodiment, it will be apparent to those skilled in the art that various changes and modifications can be made to the specific embodiment without departing from the spirit and scope of the invention as defined in the claims.

## Claims

1. An optical transmission system comprising:
a first optical fiber transmission line for transmitting wavelength division multiplexed optical signals;
a first sub-terminal station connected to one end of the first optical fiber transmission line, the first sub-terminal station comprising a first optical amplifier for amplifying the wavelength division multiplexed optical signals propagating on the first optical fiber transmission line and a first power feeding equipment for supplying power to the first optical fiber transmission line;
a second sub-terminal station connected to the other end of the first optical fiber transmission line, the second sub-terminal station comprising a second optical amplifier for amplifying the wavelength division multiplexed optical signals propagating on the first optical fiber transmission line;
a first main terminal station comprising a first optical transmitter/receiver and a first power feeding controller for remotely controlling the first power feeding equipment of the first sub-terminal station;
a second main terminal station comprising a second optical transmitter/receiver;
a second optical fiber transmission line for connecting the optical transmitter/receiver of the first main terminal station and the optical amplifier of the first sub-terminal station; and
a third optical fiber transmission line for connecting the optical transmitter/receiver of the second main terminal station and the optical amplifier of the second sub-terminal station.

2. The optical transmission system of claim 1 wherein the first optical fiber transmission line comprises an optical submarine repeater transmission cable.

3. The optical transmission system of claim 2 wherein the first and second sub-terminal stations comprise landing stations.

4. The optical transmission system of claim 3 wherein the power feeding equipment of the first and second sub-terminal stations are connected to ocean ground.

5. The optical transmission system of claim 1 wherein the second and third optical fiber transmission lines comprise back haul lines.

6. The optical transmission system of claim 1 wherein the first, second and third optical fiber transmission lines comprise substantially the same type of optical fibers.

7. The optical transmission system of claim 1 wherein the respective first, second and third optical fiber transmission lines comprise at least one pair of optical fiber lines.

8. The optical transmission system of claim 1 wherein the second sub-terminal station further comprises a second power feeding equipment for supplying power to the first optical fiber transmission line, and the second main terminal station further comprises a second power feeding controller for remotely controlling the second power feeding equipment.

9. An optical transmission system comprising a main optical fiber transmission line for transmitting wavelength division multiplexed optical signals and first and second terminal station systems connecting to the main optical fiber transmission line, wherein the first terminal station system comprising:
a sub-terminal station having an optical amplifier for optically amplifying wavelength multiplexed optical signals entered through the main optical fiber transmission line and the wavelength multiplexed optical signals to be output onto the main optical fiber transmission line, and a power feeding equipment for supplying power to the main optical fiber transmission line;
a main terminal station having an optical transmitter/receiver and a power feeding controller for controlling the power feeding equipment of the sub-terminal station; and
an internal optical fiber transmission line for connecting the optical transmitter/receiver of the main terminal station and the optical amplifier of the sub-terminal station.

10. The optical transmission system of claim 9 wherein the main optical fiber transmission line comprises an optical submarine repeater transmission cable.

11. The optical transmission system of claim 10 wherein the sub-terminal station comprises a landing station.

12. The optical transmission system of claim 11 wherein the power feeding equipment of the sub-terminal station is connected to ocean ground.

13. The optical transmission system of claim 9 wherein the internal optical fiber transmission line comprises a back haul line.

14. The optical transmission system of claim 9 wherein the main optical fiber transmission line and the internal optical fiber transmission line comprise substantially the same type of optical fibers.

15. The optical transmission system of claim 9 wherein each of the main optical fiber transmission line and the internal optical fiber transmission line comprises at least one pair of optical fiber lines.

16. A terminal station system comprising:
a sub-terminal station having an optical amplifier for optically amplifying wavelength multiplexed optical signals entered through a main optical fiber transmission line and wavelength multiplexed optical signals to be output onto the main optical fiber transmission line and a power feeding equipment for feeding the main optical fiber transmission line;
a main terminal station having an optical transmitter/receiver and a power feeding controller for remotely controlling the power feeding equipment of the sub-terminal station;
an internal fiber transmission line for connecting the optical transmitter/receiver of the main terminal station and the optical amplifier of the sub-terminal station.

17. The terminal station system of claim 16 wherein the main optical fiber transmission line comprises an optical submarine repeater transmission cable.

18. The terminal station system of claim 17 wherein the sub-terminal station comprises a landing station.

19. The terminal station system of claim 18 wherein the power feeding equipment of the sub-terminal station is connected to ocean ground.

20. The terminal station system of claim 16 wherein the internal optical fiber transmission line comprises a back haul line.

21. The terminal station system of claim 16 wherein the internal optical fiber comprises an optical fiber substantially the same with that of the main optical fiber transmission line.

22. The terminal station system of claim 16 wherein each of the main optical fiber transmission line and the internal optical fiber transmission line comprises at least one pair of optical fiber lines.
